# EUROPÄISCHE PATENTANMELDUNG

(11) **EP 4 293 264 A1**
(43) Veröffentlichungstag der Anmeldung: **20.12.2023**
(21) Anmeldenummer: 22178805.2
(22) Anmeldetag: 14.06.2022
(51) Int. Cl.: F16L 5/04, A62C 2/06

(54) **ENDLOSMANSCHETTE FÜR EIN ROHR**

(71) Anmelder: Hilti Aktiengesellschaft, 9494 Schaan (LI)
(72) Erfinder: Azimi, Hoda, 86157 Augsburg (DE); Förg, Christian, 86807 Buchloe (DE); Olschnoegger, Erica, 9488 Schellenberg (LI); Morris, Danesh Jehangir, 9000 St. Gallen (CH); Wai, Kam Fai, 9495 Triesen (LI)
(74) Vertreter: Hilti Aktiengesellschaft Corporate Intellectual Property

(57) **Zusammenfassung**

Die vorliegende Erfindung betrifft eine Endlosmanschette für ein Rohr. Die Endlosmanschette umfasst ein Hybridmaterial, optional ein Metallband und mehrere Montagevorrichtungen. Das Hybridmaterial umfasst zumindest eine erste Schicht und eine mit der ersten Schicht parallel angeordnete und flächig verbundene Trägerschicht. Die erste Schicht weist zumindest teilweise ein intumeszierendes Material auf. Das Hybridmaterial ist mehrlagig um das Rohr angeordnet. Das optionale Metallband kann in einer radialen Richtung des Rohrs außenliegend angrenzend an das Hybridmaterial angeordnet sein. Die Montagevorrichtungen sind eingerichtet, das Hybridmaterial und gegebenenfalls das Metallband zumindest teilweise entlang einer axialen Richtung des Rohrs einzufassen. Die Endlosmanschette ist mittels der Montagevorrichtungen an einer externen Aufnahme fixierbar. Die Trägerschicht weist eine Maschenstruktur auf.

## Beschreibung

Die vorliegende Erfindung betrifft eine Endlosmanschette für ein Rohr.

Brandschutzmanschetten werden genutzt, um für Rohre, insbesondere Kunststoffrohre, die durch Wände geführt werden, Abschottungslösungen bereitzustellen. Das Ziel ist, den Wanddurchbruch, durch den das Rohr geführt wird, im Brandfall, sobald das geschmolzene oder verbrannte Rohr keine Abdichtung mehr bereitstellt, zu verschließen. Dazu weisen Brandschutzmanschetten ein intumeszierendes Material auf. Intumeszierende Materialien weisen die Eigenschaft auf, sich oberhalb einer bestimmten Grenztemperatur auszudehnen. Während der Ausdehnung schäumt das Material auf und verkohlt anschließend, wodurch eine thermische isolierende widerstandsfähige Schicht bereitgestellt wird. So kann der Wanddurchbruch im Brandfall sicher verschlossen werden, um ein Ausbreiten der Flammen durch den Wanddurchbruch hindurch in angrenzende Räume zu verhindern.

Es sind Brandschutzmanschetten bekannt, die spezielle Gehäuseformen aufweisen. Das Gehäuse umfasst dann einen Aufnahmeraum für das intumeszierende Material. Allerdings ist die Positionierung des typischerweise mehrlagig ausgebildeten Bandpakets des intumeszierenden Materials innerhalb des Aufnahmeraums mit verhältnismäßig viel Handarbeit verbunden, dadurch aufwendig und kostenintensiv.

Zudem weisen die Gehäuse typischerweise komplexe Geometrien auf, die in Abhängigkeit des jeweiligen Rohrdurchmessers zusätzlich auch voneinander abweichen. Dadurch werden in Bezug auf die unterschiedlichen Rohrdurchmesser verschiedene Stanz- und Biegewerkzeuge für die Herstellung benötigt. Für den Hersteller ist die Amortisationszeit dieser Werkzeuge speziell bei nicht häufig verbauten Rohrgrößen oftmals sehr lang. Die vergleichsweise geringen Stückzahlen, die am Markt abgesetzt werden können, rechtfertigten deshalb die Investition in derart spezielle und damit kostenintensive Werkzeuge oftmals nicht.

Ferner erfordern die Gehäuse aufgrund ihrer Geometrien einen erhöhten Platzbedarf bei der Lagerung.

Der Erfindung liegt daher die Aufgabe zugrunde, eine Brandschutzmanschette bereitzustellen, mittels der die Nachteile bekannter Brandschutzmanschetten ausgeräumt oder zumindest verringert werden können. Insbesondere soll der jeweilige Wanddurchbruch im Bedarfsfall zuverlässig verschlossen werden. Zudem soll bevorzugt das Erfordernis spezieller Gehäusegeometrien abhängig vom jeweiligen Rohrdurchmesser möglichst vermieden werden. Ferner ist es vorteilhaft, wenn lediglich ein verringerter Lagerplatzbedarf benötigt wird und wenn die Manschette für den Nutzer oder Installateur einfach zu installieren ist.

Die Aufgabe wird durch den Gegenstand des unabhängigen Patentanspruchs gelöst. Vorteilhafte Ausgestaltungen sind in den abhängigen Patentansprüchen und der nachfolgenden Beschreibung angegeben, von denen jeder für sich oder in (Sub-)Kombination Aspekte der Erfindung darstellen kann.

Gemäß einem Aspekt wird eine Endlosmanschette für ein Rohr bereitgestellt. Die Endlosmanschette ist eine Brandschutzmanschette. Die Endlosmanschette umfasst ein Hybridmaterial, optional ein Metallband und mehrere Montagevorrichtungen. Das Hybridmaterial umfasst zumindest eine erste Schicht und eine mit der ersten Schicht parallel angeordnete und flächig verbundene Trägerschicht. Die erste Schicht weist zumindest teilweise ein intumeszierendes Material auf. Das Hybridmaterial ist mehrlagig um das Rohr angeordnet. Das optionale Metallband kann in einer radialen Richtung des Rohrs außenliegend angrenzend an das Hybridmaterial angeordnet sein. Die Montagevorrichtungen sind eingerichtet, das Hybridmaterial und gegebenenfalls das Metallband zumindest teilweise entlang einer axialen Richtung des Rohrs einzufassen. Die Endlosmanschette ist mittels der Montagevorrichtungen an einer externen Aufnahme fixierbar. Die Trägerschicht weist eine Maschenstruktur auf.

Die so ausgebildete Endlosmanschette kommt vorteilhaft ohne ein komplex geformtes Gehäuse aus. Die Maschenstruktur gewährleistet eine ausreichende mechanische Stabilität auch im Brandfall, wenn sich das intumeszierende Material ausdehnt. Die Maschenstruktur stellt auch eine Durchlässigkeit für das intumeszierende Material bereit, so dass sich das intumeszierende Material benachbarter Lagen des Hybridmaterials miteinander verbinden kann und eine direkte Kopplung ermöglicht wird. Dadurch ist die Abschottung des Durchbruchs für das Rohr, nachdem dieses verbrannt oder geschmolzen ist, verbessert. Ferner kommt der Fertigungsprozess ohne kostenintensive Stanz- und Biegewerkzeuge aus, so dass der Herstellungsaufwand reduziert ist. Zusätzlich entfallen auch die aufwendigen Positionierungsschritte beim Anordnen des intumeszierenden Materials in einem Aufnahmeraum eines Gehäuses. Als weiterer Aspekt ist der benötigte Lagerraum durch die Vermeidung komplexer Gehäusegeometrien reduziert. Es braucht auch nur lediglich eine Endloskomponente (Hybridmaterial) unabhängig vom jeweiligen Rohrdurchmesser produziert und beschafft zu werden. Der Installateur schneidet lediglich noch die korrekte Länge der Endlosmanschette, also des Hybridmaterials und gegebenenfalls des Metallbands, abhängig vom jeweiligen Rohrdurchmesser zurecht und installiert die Endlosmanschette anschließend.

Im vorliegenden Kontext ist unter einem Hybridmaterial ein Material zu verstehen, das zumindest zwei verschiedene Materialkomponenten aufweist. Vorliegend sind die verschiedenen Materialkomponenten in dem Hybridmaterial in parallelen Schichten angeordnet.

Das Hybridmaterial wird mehrlagig um das Rohr angeordnet. Das bedeutet, dass das Hybridmaterial mehrfach um das Rohr herumgeführt wird. Die Anzahl der Lagen des Hybridmaterials hängt dabei im Allgemeinen vom Rohrdurchmesser und damit der Größe des Wanddurchbruchs ab. Daher liegt das Hybridmaterial in der Gebrauchssituation zumindest zweilagig um das Rohr vor. Insbesondere kann das Hybridmaterial in der Gebrauchssituation mindestens zwei, vorzugsweise zwischen vier und sieben Lagen aufweisen.

Das Metallband, welches bezüglich des Zentrums des Rohrs, und damit der Endlosmanschette, radial außenliegend zum Hybridmaterial angeordnet sein kann, zwängt das intumeszierende Material im Brandfall, wenn es sich ausdehnt, in Richtung des Zentrums. Dadurch kann die Abschottung des Durchbruchs für das Rohr verbessert werden.

Die Montagevorrichtungen gewährleisten im Wesentlichen die korrekte Positionierung der Endlosmanschette bezüglich des Durchbruchs für das Rohr. Ferner verhindern sie eine Relativbewegung der Endlosmanschette bezüglich des Rohrs.

Unter Einfassen ist vorliegend zu verstehen, dass die Montagevorrichtungen das Hybridmaterial mindestens formschlüssig, insbesondere auch reibschlüssig und/oder kraftschlüssig, derart umgeben, dass das Hybridmaterial dadurch in seiner relativen Position bezüglich der externen Aufnahme und des Rohrs fixiert ist. Optional kann die Montagevorrichtung eine Klemmverbindung oder einer Hakenverbindung zum Fixieren des Hybridmaterials aufweisen.

Die externe Aufnahme ist generell diejenige Struktur, die den Durchbruch für das Rohr aufweist.

In einer bevorzugten Ausgestaltung weist die Trägerschicht ein Glasfasermaterial und/oder Aluminiummaterial auf. Bevorzugt sind auch Glasfaser- oder Metalldrahtgitter oder ein Verbund aus beiden. Derartige Materialien sind gut geeignet, um eine ausreichende mechanische Stabilität selbst im Brandfall zu gewährleisten.

Alternativ oder kumulativ umfasst das Hybridmaterial ein Gewebe. Insbesondere kann zumindest die Trägerschicht ein Gewebe aufweisen. Gewebestrukturen sind industriell standardisiert herstellbar, sodass der Fertigungsaufwand gering ist. Dennoch gewährleisten sie eine hohe mechanische Stabilität. Daher sind Gewebestrukturen gut geeignet, um die Intumeszenzkräfte des sich im Brandfall ausdehnenden intumeszierenden Materials aufzunehmen und diesen zu widerstehen.

In einer besonderen Ausgestaltung weist die Maschenstruktur eine Diamantmaschenstruktur oder eine Rechteckmaschenstruktur aufweist. Diese Geometrien haben sich als besonders gut geeignet bezüglich einer ausreichenden mechanischen Stabilität und einer gleichzeitig vorteilhaften Durchlässigkeit für das intumeszierende Material herausgestellt.

Besonders bevorzugt weist die Maschenstruktur im Wesentlichen einheitliche Maschenöffnungen mit einer ersten und einer zweiten Kantenlänge auf. Die erste und die zweite Kantenlänge betragen zumindest 2 mm und bis zu 10 mm. Bevorzugt betragen die erste und die zweite Kantenlänge zumindest 3 mm und bis zu 6 mm. Weiter bevorzugt betragen die erste und die zweite Kantenlänge zumindest 3,5 mm und bis zu 4 mm. Diese Kantenlängen der Maschenöffnungen ermöglichen einen guten Kompromiss zwischen einem vorteilhaften niedrigen Materialverbrauch und andererseits einer ausreichenden mechanischen Stabilität.

Optional weist das intumeszierende Material Graphitpartikel auf. Eine Partikelgröße der Graphitpartikel kann im Wesentlichen 0,4 mm betragen. Die Partikelgröße hat sich als besonders geeignet in Bezug auf die Kantenlängen der Maschenöffnungen erwiesen. So wird gewährleistet, dass die Graphitpartikel des intumeszierenden Materials durch die Maschenöffnungen hindurchtreten können, sodass im Brandfall eine Kopplung benachbarter Lagen des Hybridmaterials ermöglicht wird.

Bevorzugt umfasst das Hybridmaterial ferner eine dritte Schicht, die zur Trägerschicht parallel angeordnet und flächig mit dieser verbunden ist. Die dritte Schicht kann eine Folie aus einem Kunststoffmaterial aufweisen. Die dritte Schicht ermöglicht eine vereinfachte Herstellung, da das Hybridmaterial in der Fertigungsanlage basierend auf der dritten Schicht transportiert und bearbeitet werden kann. Dadurch wird beispielsweise vermieden, dass die auf der dritten Schicht angeordnete Trägerschicht oder die Schicht des intumeszierenden Materials während der Bearbeitung beschädigt werden.

Optional können die Montagevorrichtungen zumindest einen Hakenabschnitt und einen Fingerabschnitt aufweisen. Der Fingerabschnitt kann in radialer Richtung des Rohrs innenliegend angrenzend an das Hybridmaterial angeordnet sein. Der Hakenabschnitt kann zumindest in radialer Richtung des Rohrs zumindest teilweise außenliegend, gegebenenfalls an das Metallband angrenzend, angeordnet sein. Dadurch wird eine einfache, aber effektive Einfassung des Hybridmaterials und gegebenenfalls des Metallbands relativ zum Rohr gewährleistet. Somit ermöglicht die Montagevorrichtung eine Positionstreue des Hybridmaterials bezüglich des Rohrs und der externen Aufnahme.

Der Hakenabschnitt kann bevorzugt zumindest eine Öse, ein Langloch oder einen entsprechenden Abschnitt aufweisen, mittels der/dem die jeweilige Montagevorrichtung an der externen Aufnahme fixierbar ist, und die/der zumindest einen Freiheitsgrad bezüglich der Positionierung bereitstellt.

Bevorzugt sind die Fingerabschnitte zumindest zwischen einer ersten und einer zweiten Orientierungsrichtung biegbar. Die erste Orientierungsrichtung ist im Wesentlichen parallel zur axialen Richtung des Rohrs ausgerichtet. Die zweite Orientierungsrichtung ist im Wesentlichen entlang der radialen Richtung des Rohrs angeordnet. Somit kann das Hybridmaterial der Endlosmanschette zunächst in axialer Richtung durch den Fingerabschnitt eingefasst werden. Schmilzt oder verbrennt das Rohr, biegt sich der Fingerabschnitt, aufgrund der Intumeszenz, in Richtung des Zentrums des Rohrs bzw. der Endlosmanschette auf, sodass das intumeszierende Material weiter den freiwerdenden radial innenliegenden Raum einnehmen kann, um den Durchbruch abzuschotten.

Generell stellen das Hybridmaterial, das optionale Metallband und die Montagevorrichtungen separate Komponenten dar, auch wenn sie in der Gebrauchssituation zumindest formschlüssig miteinander gekoppelt sind und deshalb als gemeinsame Einheit die Endlosmanschette ausbilden. In einer alternativen Betrachtungsweise können sie gemeinsam aber auch als System angesehen werden, welches insgesamt die Endlosmanschette ausbildet. Sämtliche beanspruchte Gegenstände sind entsprechend dieser alternativen Betrachtungsweise in analoger Weise auf eine Endlosmanschette umfassend ein System zu übertragen, welches zumindest die zuvor genannten Komponenten aufweist.

Sämtliche im Hinblick auf die verschiedenen Aspekte erläuterten Merkmale sind einzeln oder in (Sub-)Kombination mit anderen Aspekten kombinierbar.

Die Erfindung sowie weitere vorteilhafte Ausführungsformen und Weiterbildungen derselben werden im Folgenden anhand der in der Zeichnung dargestellten Beispiele näher beschrieben und erläutert. Die der Beschreibung und der Zeichnung zu entnehmenden Merkmale können einzeln für sich oder zu mehreren in beliebiger Kombination erfindungsgemäß angewandt werden. Es zeigen:
- Fig. 1 eine vereinfachte schematische Darstellung des Hybridmaterials gemäß einer Ausführungsform,
- Fig. 2 eine vereinfachte schematische Darstellung des Hybridmaterials gemäß einer weiteren Ausführungsform,
- Fig. 3 eine vereinfachte schematische Darstellung der Endlosmanschette, des Rohrs und der externen Aufnahme, und
- Fig. 4 eine vereinfachte schematische Darstellung einer Montagevorrichtung.

Alle nachstehend in Bezug auf die Ausführungsbeispiele und/oder die begleitende Figur offengelegten Merkmale können allein oder in einer beliebigen Unterkombination mit Merkmalen der Aspekte der vorliegenden Offenbarung, einschließlich Merkmalen bevorzugter Ausführungsformen, kombiniert werden, vorausgesetzt, die sich ergebende Merkmalskombination ist für einen Fachmann auf dem Gebiet der Technik sinnvoll.

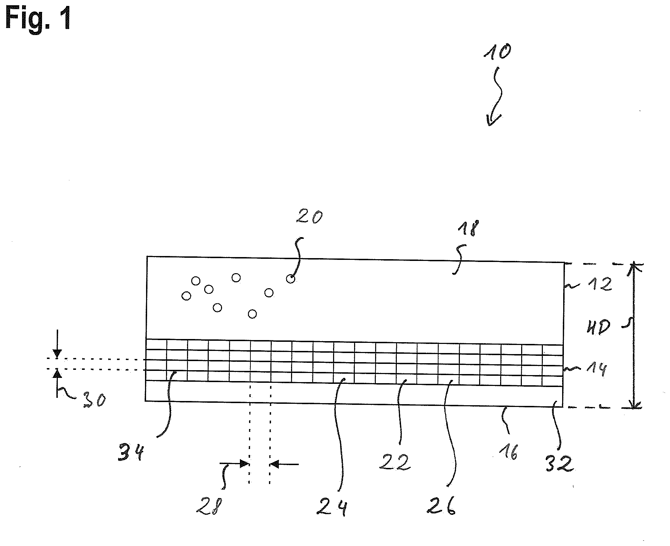

Figur 1 zeigt eine vereinfachte schematische Darstellung des Hybridmaterials 10 gemäß einer Ausführungsform. Das Hybridmaterial 10 ist hier entsprechend einer Querschnittsansicht gezeigt.

Das Hybridmaterial 10 umfasst eine erste Schicht 12, eine Trägerschicht 14 (auch zweite Schicht genannt) und eine dritte Schicht 16. Die erste Schicht 12, die Trägerschicht 14 und die dritte Schicht 16 sind entlang der Schichtdicke HD des Hybridmaterials 10 gestapelt. Das bedeutet, dass die Schichten 12, 14, 16 parallel zueinander entlang der Längserstreckungsrichtung des Hybridmaterials 10 und entlang der Breite des Hybridmaterials 10 übereinander angeordnet und paarweise flächig miteinander verbunden sind. Zur Kopplung der unterschiedlichen Schichten 12, 14, 16 können geeignete Kopplungsmittel vorgesehen sein, beispielsweise ein Kleber.

Die erste Schicht 12 umfasst zumindest teilweise das intumeszierende Material 18. Neben dem intumeszierenden Material 18 kann die erste Schicht 12 auch andere Inhaltsstoffe aufweisen. Vorliegend umfasst das intumeszierende Material 18 Graphitpartikel 20. Die Graphitpartikel 20 weisen eine Partikelgröße von im Wesentlichen 0,4 mm auf. Die Partikelgröße bezieht sich hier auf einen durchschnittlichen Durchmesser eines Graphitpartikels 20, das in erster Näherung als kugelförmig angenommen werden kann. Alternativ können die Graphitpartikel 20 auch andere Geometrien aufweisen. Die größte Ausdehnung der jeweiligen Partikelgeometrie beträgt aber im Wesentlichen 0,4 mm.

An die erste Schicht 12 angrenzend ist die Trägerschicht 14 angeordnet. Die Trägerschicht 14 weist eine Maschenstruktur 22 auf. Vorliegend ist die Maschenstruktur 22 als Rechteckmaschenstruktur 24 ausgebildet. Die Rechteckmaschenstruktur 24 weist im Wesentlichen einheitlich ausgebildete rechteckige Maschen 26 auf.

Vorliegend weisen die einzelnen Maschen 26 eine erste Kantenlänge 28 und eine zweite Kantenlänge 30 auf. Die erste Kantenlänge 28 und die zweite Kantenlänge 30 betragen in dieser Ausführungsform zumindest 3,5 mm und bis zu 4 mm.

Auch wenn die Öffnungen der Maschen 26 vorliegend aufgrund der Querschnittsansicht lediglich senkrecht zur Längserstreckungsrichtung und der Schichtdicke HD des Hybridmaterials 10 ausgebildet sind, so können die Maschen 26 auch Öffnungen entlang der Schichtdicke HD aufweisen.

Die dritte Schicht 16 weist eine Folie 32 aus, die vorliegend ein Kunststoffmaterial umfasst.

Im Brandfall schäumen die Graphitpartikel 20 auf und dehnen sich aus. Dies führt insgesamt zu einer Expansion der ersten Schicht 12 und damit des Hybridmaterials 10. Durch die Partikelgröße der Graphitpartikel 20 im Verhältnis zu den Kantenlängen 28, 30 der Maschen 26 ist sichergestellt, dass das intumeszierende Material 18 einschließlich der Graphitpartikel 20 durch die Maschen 26 teilweise hindurchtreten kann. Da die Folie 32 im Brandfall schmilzt, kann so eine Kopplung zwischen dem intumeszierenden Material 18 benachbarter, gestapelter Lagen des Hybridmaterials 10 gewährleistet werden. Dadurch wird eine belastbare mechanisch stabile Kopplung geschaffen, die genutzt werden kann, um einen Wanddurchbruch abzuschotten.

Um eine ausreichende mechanische Stabilität des Hybridmaterials 10 zu gewährleisten, weist zumindest die Trägerschicht 14 ein Gewebe 34 auf. Die Maschen 26 sind also aus einem Gewebe 34 geformt.

Optional können auch die erste Schicht 12 und/oder die dritte Schicht 16 das Gewebe 34 aufweisen.

Alternativ kann das Gewebe 34 je Schicht 12, 14, 16 voneinander abweichen.

Die Trägerschicht 14 kann auch als zweite Schicht angesehen werden.

Die Maschenstruktur 22 der Trägerschicht 14 weist bevorzugt ein Glasfasermaterial und/oder ein Aluminiummaterial auf.

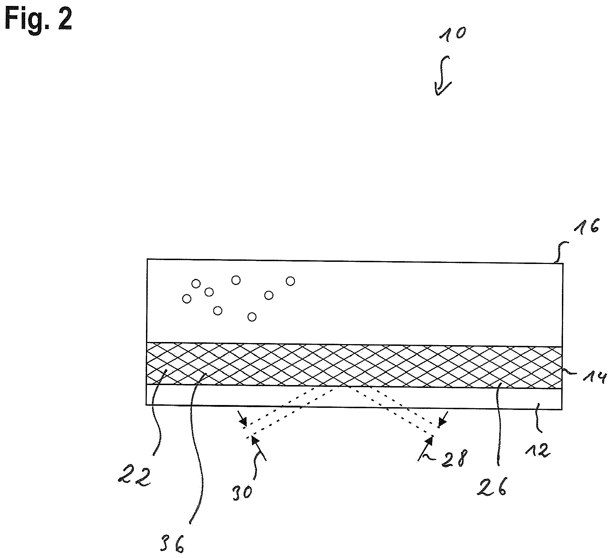

Figur 2 zeigt eine vereinfachte schematische Darstellung des Hybridmaterials 10 gemäß einer weiteren Ausführungsform. Es wird hier nur auf Unterschiede zu der vorhergehenden Ausführungsform eingegangen.

Im Unterschied zur vorhergehenden Ausführungsform weist die Trägerschicht 14 eine Maschenstruktur 22 auf, die eine Diamantmaschenstruktur 36 umfasst. Die Kantenlängen 28, 30 der Maschen 26 der Diamantmaschenstruktur 36 entsprechen denjenigen der Rechteckmaschenstruktur 24 aus der vorhergehenden Ausführungsform.

Der übrige Aufbau des Hybridmaterials 10 entspricht demjenigen, der vorhergehenden Ausführungsform.

Die Wahl der Form der Maschen 26 hat Einfluss auf die mechanische Stabilität. Das bedeutet, dass in besonders beanspruchten Anwendungsfällen beispielsweise die Diamantmaschenstruktur 36 bevorzugt sein kann.

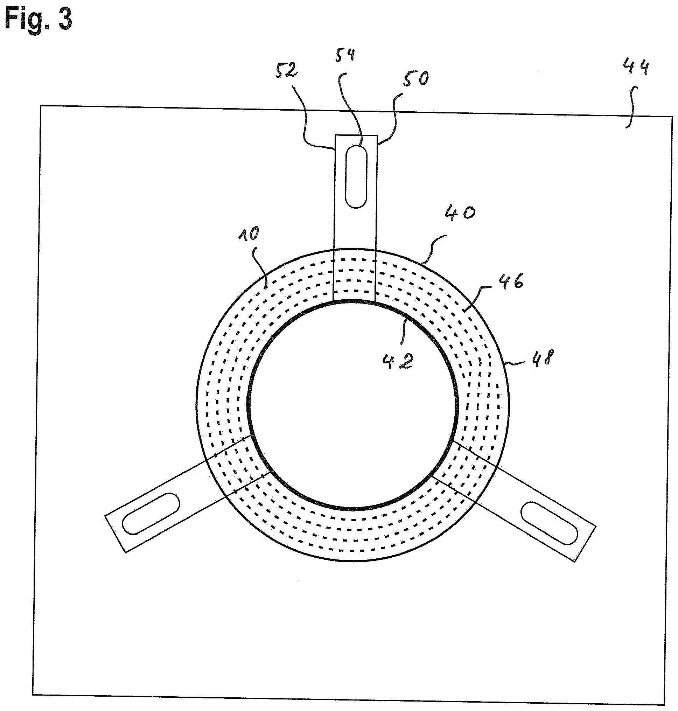

Figur 3 zeigt eine vereinfachte schematische Darstellung der Endlosmanschette 40, des Rohrs 42 und der externen Aufnahme 44. Gezeigt sind die Komponenten entsprechend einer Querschnittsansicht.

Die Endlosmanschette 40 umfasst das Hybridmaterial 10, das radial außenliegend mehrlagig um das Rohr 42 angeordnet wird. Die Anzahl der Lagen 46 hängt dabei im Allgemeinen vom Durchmesser des Rohrs 42 ab.

Die Endlosmanschette 40 kann ferner ein Metallband 48 umfassen, welches radial außenliegend relativ zum Zentrum der Endlosmanschette 40 und damit zum Zentrum des Rohrs 42 benachbart an das Hybridmaterial 10 angeordnet sein kann.

Die Endlosmanschette 40 umfasst ferner mehrere, hier drei, Montagevorrichtungen 50, die einerseits der Positionierung der Endlosmanschette 40 dienen und andererseits eine korrekte Positionierung des Hybridmaterials 10 und gegebenenfalls des Metallbands 48 relativ zum Rohr 42 gewährleisten. Die Montagevorrichtungen 50 fassen das Hybridmaterial 10 und gegebenenfalls das Metallband 48 zumindest entlang der axialen Richtung des Rohrs 42 zumindest teilweise ein. Die Montagevorrichtungen 50 verhindern somit, dass sich das Hybridmaterial 10 oder gegebenenfalls das Metallband 48 entlang der axialen Richtung, der radialen Richtung oder der Umfangsrichtung des Rohrs 42 bewegen kann.

Dadurch, dass in einer bevorzugten Ausführungsform auch das Metallband 48 durch die Montagevorrichtungen 50 eingefasst ist, wird das intumeszierende Material 18 in radialer Richtung des Rohrs 42 in Richtung des Zentrums gezwungen, wenn es sich im Brandfall ausdehnt.

Verbrennt oder schmilzt also das Rohr 42, so kann das intumeszierende Material 18 den freiwerdenden Raum einnehmen und den entsprechenden Durchbruch in der externen Aufnahme 44, beispielsweise einer Wand, verschließen. Ferner tritt dabei das intumeszierende Material 18 der benachbarten Lagen 46 des Hybridmaterials 10 durch die Maschen 26 und koppelt sich miteinander, so dass eine mechanisch stabile Abschottung gewährleistet wird.

Die Montagevorrichtungen 50 weisen zumindest Hakenabschnitte 52 auf, mittels denen die Endlosmanschette 40 an der externen Aufnahme 44 fixiert werden kann. Vorteilhaft weisen die Hakenabschnitte 52 ein Langloch 54 auf, um zumindest einen Freiheitsgrad bei der Fixierung bereitzustellen.

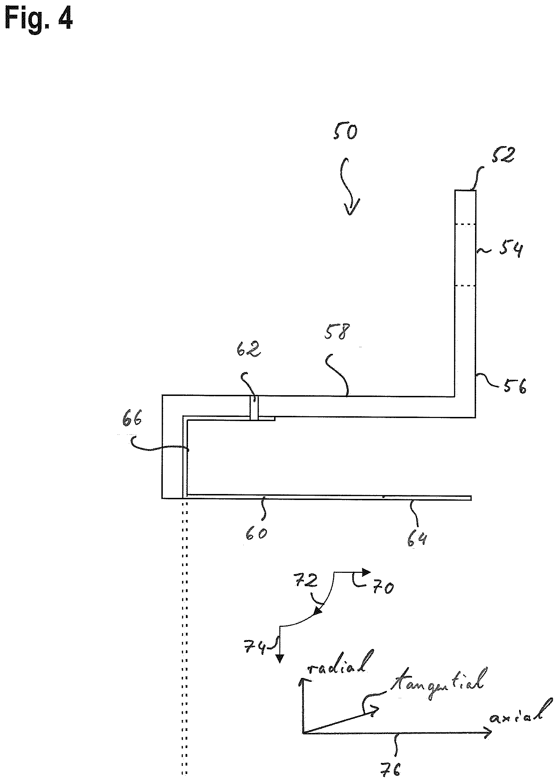

Figur 4 zeigt eine vereinfachte schematische Darstellung einer Montagevorrichtung 50 gemäß einer Seitenansicht.

Die Montagevorrichtung 50 weist einen Hakenabschnitt 52 mit einem Langloch 54 zur Fixierung an der externen Aufnahme 44 auf. Nach erfolgter Fixierung an der externen Aufnahme 44 ist die Anlagefläche 56 angrenzend zur externen Aufnahme 44 angeordnet.

Ferner weist der Hakenabschnitt 52 der Montagevorrichtung 50 einen im Wesentlichen L-förmigen Basisabschnitt 58 auf. Der lange Schenkel des L-förmigen Basisabschnitts 58 ist in der Gebrauchssituation entlang der axialen Richtung des Rohrs 42 orientiert. Der kurze Schenkel des L-förmigen Basisabschnitts 58 ist in der Gebrauchssituation entlang der radialen Richtung des Rohrs 42 orientiert.

Die Montagevorrichtung 50 umfasst ferner einen Fingerabschnitt 60, der sich zumindest teilweise entlang der axialen Richtung erstreckt. Der Fingerabschnitt 60 ist mit dem Basisabschnitt 58 durch geeignete Verbindungsmittel 62 gekoppelt, beispielsweise durch Schrauben, Nieten, einen Kleber, oder ähnliche. Alternativ kann der Fingerabschnitt 60 auch zusammen mit dem Hakenabschnitt 52 aus einem Material gefertigt werden, jedoch muss hier die Biegestelle so ausgearbeitet sein, dass sich der Fingerabschnitt 60 mit geringer Kraft im Brandfall biegen lässt.

Während der lange Schenkel des L-förmigen Basisabschnitts 58 in der Gebrauchssituation radial außenliegend relativ zum Hybridmaterial 10 und gegebenenfalls dem Metallband 48 der Endlosmanschette 40 angeordnet ist, ist der Fingerabschnitt 60 in der Gebrauchssituation radial innenliegend relativ zum Hybridmaterial 10 und gegebenenfalls dem Metallband 48 der Endlosmanschette 40 angeordnet. Eine Außenfläche 64 des Fingerabschnitts 60 ist dann angrenzend an das Rohr 42 angeordnet.

Entlang der axialen Richtung werden das Hybridmaterial 10 und gegebenenfalls das Metallband 48 in der Gebrauchssituation zwischen der externen Aufnahme 44 und der Anstoßfläche 66 eingefasst.

Entlang der radialen Richtung werden das Hybridmaterial 10 und gegebenenfalls das Metallband 48 in der Gebrauchssituation zwischen dem Fingerabschnitt 60 und dem langen Schenkel des L-förmigen Basisabschnitts 58 eingefasst.

In einer besonders bevorzugten Ausführungsform werden das Hybridmaterial 10 und das Metallband 48 insgesamt durch die Montagevorrichtung 50 eingefasst.

Im Brandfall dehnt sich das intumeszierende Material 18 aus. Um diese Ausdehnung nicht zu behindern, ist der Fingerabschnitt 60 derart, dass er sich aus einer ersten Orientierungsrichtung 70 entlang der axialen Richtung des Rohrs 42 aufgrund einer Biegung 72 in eine zweite Orientierungsrichtung 74 entlang der radialen Richtung des Rohrs 42 verbiegen kann. Dadurch wird der Expansion des intumeszierenden Materials 18 mehr Raum gegeben. Ferner wird so ermöglicht, dass der durch das schmelzende oder verbrennende Rohr 42 freiwerdende Raum durch das intumeszierende Material 18 eingenommen werden kann.

Im Gegensatz zum Fingerabschnitt 60 verbiegt sich der Basisabschnitt 58 und auch der Hakenabschnitt 52 insgesamt im Brandfall im Wesentlichen nicht, zumindest nicht bei den typischen Brandbedingungen.

Als Hilfe veranschaulicht das Koordinatensystem 76 schematisch die Orientierung bezüglich des Rohrs 42. Dabei bezieht sich tangential auf die in der Zeichenebene liegende Umfangsrichtung des Rohrs 42.

In der vorliegenden Offenbarung kann auf Mengen und Zahlen Bezug genommen werden. Sofern nicht ausdrücklich angegeben, sind solche Mengen und Zahlen nicht als einschränkend zu betrachten, sondern als Beispiele für die möglichen Mengen oder Zahlen im Zusammenhang mit der vorliegenden Offenbarung. In diesem Zusammenhang kann in der vorliegenden Offenbarung auch der Begriff "Mehrzahl" verwendet werden, um auf eine Menge oder Zahl zu verweisen. In diesem Zusammenhang ist mit dem Begriff "Mehrzahl" jede Zahl gemeint, die größer als eins ist, z. B. zwei, drei, vier, fünf, usw. Die Begriffe "etwa", "ungefähr", "nahe" usw. bedeuten plus oder minus 5 % des angegebenen Wertes.

## Patentansprüche

1. Endlosmanschette (40) für ein Rohr (42) umfassend ein Hybridmaterial (10), optional ein Metallband (48) und mehrere Montagevorrichtungen (50), wobei das Hybridmaterial (10) zumindest eine erste Schicht (12) und eine mit der ersten Schicht (12) parallel angeordnete und flächig verbundene Trägerschicht (14) umfasst, wobei die erste Schicht (12) zumindest teilweise ein intumeszierendes Material (18) aufweist, wobei das Hybridmaterial (10) mehrlagig um das Rohr (42) angeordnet ist und gegebenenfalls das Metallband (48) in einer radialen Richtung des Rohrs (42) außenliegend angrenzend an das Hybridmaterial (10) angeordnet ist, wobei die Montagevorrichtungen (50) eingerichtet sind, das Hybridmaterial (10) und gegebenenfalls das Metallband (48) zumindest teilweise entlang einer axialen Richtung des Rohrs (42) einzufassen und wobei die Endlosmanschette (40) mittels der Montagevorrichtungen (50) an einer externen Aufnahme (44) fixierbar ist, **dadurch gekennzeichnet, dass** die Trägerschicht (14) eine Maschenstruktur (22) aufweist.

2. Endlosmanschette (40) nach Anspruch 1, **dadurch gekennzeichnet, dass** die Trägerschicht (14) ein Glasfasermaterial und/oder Aluminium umfasst.

3. Endlosmanschette (40) nach Anspruch 1 oder 2, **dadurch gekennzeichnet, dass** das Hybridmaterial (10) ein Gewebe (34) umfasst, insbesondere wobei zumindest die Trägerschicht (14) ein Gewebe (34) aufweist.

4. Endlosmanschette (40) nach einem der vorherigen Ansprüche, **dadurch gekennzeichnet, dass** die Maschenstruktur (22) eine Diamantmaschenstruktur (36) oder eine Rechteckmaschenstruktur (24) aufweist.

5. Endlosmanschette (40) nach einem der vorherigen Ansprüche, **dadurch gekennzeichnet, dass** die Maschenstruktur (22) im Wesentlichen einheitliche Maschenöffnungen mit einer ersten und einer zweiten Kantenlänge (28, 30) aufweist, und wobei die erste und die zweite Kantenlänge (28, 30) zumindest 2 mm und bis zu 10 mm betragen, bevorzugt wobei die erste und die zweite Kantenlänge (28, 30) zumindest 3 mm und bis zu 6 mm betragen, weiter bevorzugt wobei die erste und die zweite Kantenlänge (28, 30) zumindest 3,5 mm und bis zu 4 mm betragen.

6. Endlosmanschette (40) nach einem der vorherigen Ansprüche, **dadurch gekennzeichnet, dass** das intumeszierende Material (18) Graphitpartikel (20) aufweist und eine Partikelgröße der Graphitpartikel (20) im Wesentlichen 0,4 mm beträgt.

7. Endlosmanschette (40) nach einem der vorherigen Ansprüche, **dadurch gekennzeichnet, dass** das Hybridmaterial (18) ferner eine dritte Schicht (12) umfasst, die zur Trägerschicht (14) parallel angeordnet und flächig mit dieser verbunden ist, und wobei die dritte Schicht (12) eine Folie (32) aus einem Kunststoffmaterial aufweist.

8. Endlosmanschette (40) nach einem der vorherigen Ansprüche, **dadurch gekennzeichnet, dass** die Montagevorrichtungen (50) zumindest einen Hakenabschnitt (52) und einen Fingerabschnitt (60) aufweisen, und wobei der Fingerabschnitt (60) in radialer Richtung des Rohrs (42) innenliegend angrenzend an das Hybridmaterial (10) und der Hakenabschnitt (52) zumindest in radialer Richtung des Rohrs zumindest teilweise außenliegend angrenzend, gegebenenfalls an das Metallband (48), angeordnet ist.

9. Endlosmanschette (40) nach Anspruch 8, **dadurch gekennzeichnet, dass** die Fingerabschnitte (60) zumindest zwischen einer ersten und einer zweiten Orientierungsrichtung (70, 74) biegbar sind, wobei die erste Orientierungsrichtung (70) im Wesentlichen parallel zur axialen Richtung des Rohrs (42) ausgerichtet ist, und wobei die zweite Orientierungsrichtung (74) im Wesentlichen entlang der radialen Richtung des Rohrs (42) angeordnet ist.
